# EUROPÄISCHE PATENTSCHRIFT

(11) **EP 3 201 109 B1**
(45) Veröffentlichungstag und Bekanntmachung des Hinweises auf die Patenterteilung: **18.12.2019**
(21) Anmeldenummer: 15759824.4
(22) Anmeldetag: 10.09.2015
(51) Int. Cl.: B65G 51/03, B67B 3/00

(54) **VORRICHTUNG UND VERFAHREN ZUM VERTIKALEN FÖRDERN VON ORIENTIERTEN FORMTEILEN**
DEVICE AND METHOD FOR THE VERTICAL CONVEYING OF ORIENTED MOULDED PARTS
DISPOSITIF ET PROCÉDÉ DE TRANSPORT VERTICAL DE PIÈCES MOULÉES ORIENTÉES

(30) Priorität: 30.09.2014 DE 102014114171
(43) Veröffentlichungstag der Anmeldung: 09.08.2017
(73) Patentinhaber: Induflex Robert Morgan e.K., 27337 Blender (DE)
(72) Erfinder: MORGAN, Robert, 27337 Blender (DE)
(74) Vertreter: Eisenführ Speiser
(86) Internationale Anmeldenummer: PCT/EP2015/070774
(87) Internationale Veröffentlichungsnummer: WO 2016/050481

(56) Entgegenhaltungen:
- WO-A1-2013/068379
- DE-A1- 1 456 914
- DE-T2- 69 903 355
- DE-U1-202006 017 346
- DE-U1-202013 105 117
- GB-A- 1 554 170

## Beschreibung

Die Erfindung betrifft eine Vorrichtung und ein Verfahren zum Fördern von Formteilen, insbesondere Verschlusskappen von Flaschen, von einem unteren in einen oberen Bereich.

Gemäß dem Stand der Technik ist bei der automatisierten Flaschenabfüllung eine Vielzahl von Schritten nötig. Üblicherweise werden zu befüllende Flaschen nach der Abfüllung zum Beispiel in einem Schritt mit Kappen bzw. Verschlusskappen verschlossen.

Die Kappen müssen vor dem Verschließen sortiert und desinfiziert werden. Ferner müssen die Kappen häufig in einen höher gelegenen Bereich der Abfüllstätte gefördert werden, da das Verschließen der Flaschen aufgrund der besseren räumlichen Nutzung der Abfüllstätten meist in diesen oberen Bereichen erfolgt. Abfüllstätten sind hier Hallen oder Gebäude, in denen die Abfüllung erfolgt.

Die Kappen werden üblicherweise mit linearen Förderstrecken (wie einer linearen schiefen Ebene) auf das höher liegende Niveau überführt, um die Orientierung der zuvor bereits orientierten - also bezüglich ihrer Orientierung vorsortierten - Kappen nicht wieder zu verlieren. In DE 20 2013 105 117 U1 ist beispielsweise eine Behälterverschlussfördereinrichtung offenbart. Dokument DE 699 03 355 T2 offenbart eine Vorrichtung nach dem Oberbegriff des Anspruchs 1.

Derartige lineare Förderstrecken mit einem geneigten linearen Förderer benötigen jedoch, um die zu überwindenden Höhenunterschiede, von zum Beispiel 4-6 m, zu bewältigen, einen sehr großen Flächenbedarf. Eine Steigung, bei der die Kappen die zuvor hergestellte Orientierung nicht wieder verlieren, darf nämlich nicht überstiegen werden. Ab einem bestimmten Steigungswinkel würden die Kappen nämlich aufgrund der Gewichtskraft auf dem Förderband aus ihrer Position gebracht werden und entgegen der Förderrichtung beschleunigt werden. Die Kappen können dann vom Förderband fallen und/oder ihre Orientierung auf dem Förderband verlieren.

Orientierung bedeutet insbesondere bei Kappen und anderen Formteilen, die im Wesentlichen eine rotationssymmetrische Form und damit eine Rotationsachse sowie eine zum Innenraum des Formkörpers hin geöffnete und eine zum Innenraum des Formkörpers hin geschlossene Seite, durch die die Rotationsachse verläuft, aufweisen, dass die Ausrichtung der Rotationsachse sowie die Ausrichtung zumindest einer der Seiten vorgegeben wird.

Aufgabe der vorliegenden Erfindung ist es daher, zuvor orientierte Formteile, zum Beispiel Kappen von Flaschen, von einem unteren Bereich, der vergleichsweise tiefer bzw. niedriger liegt als ein oberer Bereich, in den oberen Bereich zu fördern. Hierbei soll die Vorrichtung gleichzeitig platzsparend sein und derart eingerichtet sein, dass die Kappen während der Förderung Ihre Orientierung nicht verlieren.

Die vorliegende Erfindung löst diese Aufgabe durch eine Vorrichtung zur Förderung von Formteilen nach Anspruch 1 sowie ein Verfahren zum Fördern von Formteilen nach Anspruch 10.

Die Erfindung umfasst dazu eine Vorrichtung zur Förderung von Formteilen. Die Formteile sind zum Beispiel zuvor gefertigte Kappen zum Verschließen von Flaschen. Die Vorrichtung dient, um die Formteile von einem im Verhältnis zu einem oberen Bereich tiefer bzw. niedriger liegenden unteren Bereich in den oberen Bereich zu fördern.

Zur Förderung umfasst die Erfindung einen zylindrischen Kern, um den, insbesondere auf seiner Außenseite, eine Führung zum Führen der Formteile spiralförmig angeordnet ist. Spiralförmig bedeutet in diesem Zusammenhang insbesondere mit einem im Wesentlichen stetigen Anstieg schraubenförmig oder helixartig verlaufend.

Im Bereich der Führung sind Düsen (Öffnungen; Bohrungen) entlang der Führung angeordnet, die dienen, um ein Fluid, also eine Flüssigkeit oder ein Gas, in den Bereich der Führung zu führen. Die Düsen dienen also, um das Fluid mit einer vordefinierten Strömungsgeschwindigkeit in den Bereich der Führung zu bringen. Die Düsen dienen demnach, um mit dem Fluid eine Kraft auf die Formteile auszuüben, sodass die Formteile durch diese Kraft entlang der Führung und somit spiralförmig um den Kern - entgegen der Schwerkraft - vom unteren Bereich in den oberen Bereich gefördert werden.

Damit ist es möglich, die Formteile vom tiefer liegenden unteren Bereich in den oberen Bereich auf einem sehr begrenzten Raum zu fördern. Der benötigte Raum entspricht im Wesentlichen nur dem Durchmesser des Kerns. Aufgrund der spiralförmig um den Kern verlaufenden Führung ist eine geringe Steigung der Führung realisierbar, sodass mit geringem Kraftaufwand ein Fortbewegen der Formteile entgegen der Schwerkraft möglich ist und gleichzeitig die Orientierung zuvor orientierter Formteile durch die geringe aufzuwendende Kraft gehalten werden kann.

Gemäß einer ersten Ausführungsform der Erfindung umfasst die Führung einen Führungseingang, einen Führungsausgang und eine zwischen dem Führungseingang und dem Führungsausgang angeordnete Führungsstrecke.

Im bestimmungsgemäßen Gebrauch wird die Vorrichtung aufrecht angeordnet. Aufrechte Anordnung der Vorrichtung bedeutet hier, dass die Achse des zylindrischen Kerns im Wesentlichen senkrecht zum Untergrund steht. Im bestimmungsgemäßen Gebrauch steht der zylindrische Kern demnach auf einer seiner Deckelflächen, sodass die Führung auf der Mantelfläche im Bereich der einen Deckelfläche beginnt und in einem Bereich der anderen Deckelfläche endet. Im Bereich der einen Deckelfläche, der beim bestimmungsgemäßen Gebrauch in einem unteren Bereich des Kerns liegt, befindet sich demnach der Führungseingang und im Bereich der anderen Deckelfläche, der beim bestimmungsgemäßen Gebrauch in einem oberen Bereich des Kerns liegt, der Führungsausgang.

Zwischen dem Führungseingang und dem Führungsausgang ist die Führungsstrecke angeordnet. Die Führungsstrecke ist derart eingerichtet, die Formteile am Führungseingang in einer ersten Orientierung aufzunehmen und am Führungsausgang in einer zweiten Orientierung, die von der ersten Orientierung abhängig ist, auszugeben. Hierzu ist die Führungsstrecke zum Beispiel so an die Formteile, insbesondere die Kappen, angepasst, dass diese sich zwar um ihre Rotationsachse innerhalb der Führungsstrecke drehen können, wobei eine Drehung in anderen Richtungen durch die Führungsstrecke im Wesentlich verhindert und/oder vorgegeben wird.

Somit ist vorteilhafterweise die Orientierung der Formteile im unteren Bereich einer Abfüllstätte möglich, sodass die Formteile in einer von dieser ersten Orientierung abhängigen zweiten Orientierung die Fördervorrichtung am Führungsausgang verlassen und dort direkt einer weiteren Vorrichtung zugeführt werden können, die zum Beispiel zuvor abgefüllte Flaschen mit den orientierten Kappen verschließt.

Gemäß einer weiteren vorteilhaften Ausführungsform ist die Steigung der Führungsstrecke in einem mittleren Bereich sehr flach, insbesondere mit einem Steigungswinkel von weniger als 10°, zum Beispiel 4°, ausgebildet.

Vorteilhafterweise ist dadurch eine Lagerung von einer großen Anzahl, im Bereich von zum Beispiel 300 bis 600, insbesondere 500, Formteilen in der Vorrichtung möglich.

Gemäß einer weiteren Ausführungsform umfasst die Führungsstrecke mehrere im Wesentlichen zueinander parallel verlaufende Schienen, zum Beispiel nach Art einer Reling. Der Abstand und/oder die Anordnung dieser Schienen ist dabei so gewählt, dass diese die Formteile, insbesondere Kappen, einerseits in eine vordefinierte Richtung - nämlich entlang einer spiralförmigen Bahn - führen und andererseits die Bewegung der Kappen in die anderen Richtungen begrenzen. Die Begrenzung erfolgt derart, dass die Formteile, insbesondere die Kappen, nach dem Eintreten in den Führungseingang und vor dem Austreten aus dem Führungsausgang innerhalb der Führung, insbesondere der Führungsstrecke, gehalten werden.

Die Schienen stellen damit eine Begrenzung dar, durch die verhindert wird, dass die Formteile zum Beispiel nach oben, nach unten oder in einer Richtung vom Zentrum des zylindrischen Kerns weg, aus der Führungsstrecke heraustreten. Die Führungsschienen entsprechen zum Beispiel gebogenen Stangen, die in vordefinierten Abständen zueinander und vom Kern mit Halterungen am Kern befestigt sind.

Gemäß einer besonderen Ausführungsform sind vier parallele Schienen vorgesehen. Eine Schiene dient - bei aufrechter Anordnung der Vorrichtung - zur Begrenzung der Führungsstrecke in Richtung des Bodens, eine weitere Schiene dient zur Begrenzung der Führungsstrecke in Deckenrichtung und zwei Führungsschienen dienen zur Begrenzung der Führungsstrecke in eine Richtung, die senkrecht von der Rotationsachse des zylindrischen Kerns weg zeigt. Die Begrenzung der Führungsstrecke senkrecht in Richtung auf die Rotationsachse des zylindrischen Kerns erfolgt bei dieser Ausführungsform durch die äußere Mantelfläche des zylindrischen Kerns selbst.

Durch eine derartige Ausgestaltung der Führung mittels Schienen ist diese besonders preisgünstig und einfach herzustellen.

Gemäß einer weiteren Ausführungsform sind die Düsen versetzt zu einer gedachten Mittellinie der Führung, insbesondere oberhalb dieser Mittellinie, entlang der Führung nach Art einer Lochlinie angeordnet. Oberhalb bedeutet in diesem Zusammenhang oberhalb der Mittellinie, wie sie verläuft, wenn die Vorrichtung zum bestimmungsgemäßen Gebrauch aufrecht aufgestellt bzw. angeordnet ist.

Insbesondere verlaufen die Düsen entlang der Führung im Bereich der Mitte der oberen Hälfte zwischen der gedachten Mittellinie und der oberen Begrenzung der Führungsstrecke. Ferner ist gemäß dieser Ausführungsform die Führungsstrecke derart gewählt, dass die Formteile durch die obere und die untere Begrenzung der Führungsstrecke nicht in ihrer Bewegung um ihre Rotationsachse eingeschränkt werden.

Demnach können rotationssymmetrische Formteile, wie z.B. Kappen, demnach abgestützt durch die untere Begrenzung der Führungsstrecke und angetrieben durch die Düsen, die im Bereich versetzt zur gedachten Mittellinie angeordnet sind, durch die Führung in der Führungsstrecke rollend vom Führungseingang zum Führungsausgang gefördert werden.

Kappen werden demnach zum Beispiel mit einer im Wesentlichen horizontal verlaufenden Rotationsachse und mit ihren zum Innenraum der Kappen hin geöffneten Seiten, die zu den Düsen zeigen, in den Führungseingang eingegeben und rollen dann angetrieben vom Fluid, das von innen und außen zur Rotationsachse versetzt gegen die "Laufflächen" der Kappe beschleunigt wird, entlang der Führungsstrecke.

Durch dieses Rollen der Formteile wird verhindert, dass die Formteile zum Beispiel an der Begrenzung der Führungsstrecke punktuell belastet und damit beschädigt werden.

Gemäß einer weiteren Ausführungsform ist der Kern als Hohlzylinder ausgebildet und weist geschlossene Deckelflächen auf, sodass sich im Inneren des Hohlzylinders und der Deckelflächen ein Hohlraum bildet. Ferner weist der Kern zumindest einen Druckanschluss von seiner Außenseite zu seinem Hohlraum auf, durch den ein Druck im Hohlraum erzeugbar ist.

Die Düsen sind bei dieser Ausführungsform durch Öffnungen in der Mantelfläche des Zylinders gebildet, wobei diese Öffnungen - wie auch der Druckanschluss - vom Hohlraum zur Außenseite des Hohlzylinders führen.

Gemäß einer besonders bevorzugten Ausführungsform weist der bzw. die Druckanschlüsse einen größeren Durchmesser auf, als die Öffnungen der Düsen. Somit ist ein im Verhältnis zur Außenseite höherer Druck im Hohlraum des Kerns erzeugbar, der zwar kontinuierlich durch den Fluidfluss durch die Düsen reduziert wird, aber durch die verhältnismäßig größere Zugangsöffnung des Druckanschlusses oberhalb einem vordefinierten Wert gehalten werden kann.

Es ist demnach in einfacher Weise möglich, einen definierten Fluidstrom durch die Düsen herzustellen.

Gemäß einer weiteren Ausführungsform ist der Hohlraum in mehrere Kammern unterteilt, wobei jede Kammer jeweils mindestens einen Druckanschluss aufweist. Die Düsen, die zur selben Kammer führen, werden als Düsen eines Düsensegments dieser Kammer bezeichnet. Demnach sind dann Düsensegmente über die Höhe des Zylinders, also im Verlauf der Führung nacheinander, angeordnet. Die Düsensegmente werden demnach in einer vordefinierten Reihenfolge, insbesondere durch Anordnung der Kammern, von den Formteilen durchlaufen.

Somit wird es ermöglicht, unterschiedliche Fluide, die dann durch das der Kammer zugeordnete Segment von Düsen zum Ausüben der Kraft auf die Formteile verwendet werden, zu verwenden. Es wird ermöglicht, die Formteile zum Beispiel in einem ersten Düsensegment mit einem Desinfektionsmittel, zum Beispiel Wasserstoffperoxid, Peressigsäure oder dergleichen, anzutreiben und dabei gleichzeitig zu desinfizieren, insbesondere aseptisch zu desinfizieren. In einem darauffolgenden Düsensegment kann dann ein Antreiben mit warmer Luft erfolgen, die gleichzeitig zunächst den chemischen Desinfektionsprozess verstärkt und dann das Desinfektionsmittel verdampfen lässt. In einem optionalen auf das zweite Düsensegment folgenden dritten Düsensegment dient dann z.B. kalte Luft zum antreiben und gleichzeitigen Abkühlen der Formteile.

Demnach ist also mit der Vorrichtung gleichzeitig eine Desinfektion während der Förderung möglich. Eine Desinfektion nach Verlassen der Vorrichtung zum Fördern im oberen Bereich einer Abfüllstätte entfällt, sodass aufwendige Konstruktionen, wie Arbeitsbühnen, hierfür eingespart werden.

Gemäß einer weiteren Ausführungsform ist eine Einhausung zum Einhausen zumindest eines Abschnitts des Kerns, insbesondere des unteren Abschnitts des Kerns, vorgesehen.

Die Einhausung dient, um das Desinfektionsmittel, das durch die Düsen hinausgesprüht wird, im unteren Bereich der Einhausung wieder aufzufangen und für Personal gefährliche Gase im oberen Bereich der Einhausung abzusaugen. Ein erneuter Gebrauch des aufgefangenen Desinfektionsmittels ist möglich und gleichzeitig ist Personal im Bereich der Vorrichtung vor dem Kontakt mit dem Desinfektionsmittel geschützt.

Ferner ist gemäß einer weiteren Ausführungsform am Führungsausgang direkt ein Steriltunnel angeordnet, sodass die Formteile nach dem Desinfizieren hierin weiter gefördert werden können und nicht wieder in der nicht sterilen Umgebung verunreinigt werden.

Gemäß einer weiteren Ausführungsform ist im Innenraum bzw. Inneren des als Hohlzylinders ausgebildeten Kerns ein weiterer Zylinder angeordnet. Der Hohlraum ist dann durch die äußere Mantelfläche des weiteren Zylinders und die innere Mantelfläche des Hohlzylinders sowie die Deckelflächen begrenzt. Diese Begrenzung führt dazu, dass der Hohlraum - im Verhältnis zur Vorrichtung ohne weiteren Zylinder - verkleinert wird und somit einerseits weniger Fluid im Hohlraum vorgehalten werden muss und andererseits der Druck im Hohlraum und damit der Fluss durch die Düsen besser kontrolliert werden kann. Der Zylinder im Innenraum des Hohlzylinders ist gemäß einer weiteren bevorzugten Ausführungsform ebenfalls ein Hohlzylinder.

Gemäß einer weiteren vorteilhaften Ausführungsform sind die Düsen ausgerichtet, um eine Hauptströmungsrichtung des Fluids zu erzeugen. Hierbei ist die Ausrichtung derart gewählt, sodass die Hauptströmungsrichtung eine Komponente aufweist, die in Förderrichtung vom Führungseingang zum Führungsausgang führt und daher dient, die Formteile vom Führungseingang zum Führungsausgang in Förderrichtung zu fördern. Demnach ist durch einfache Ausrichtung der Düsen die Förderrichtung vorbestimmbar.

Erfindungsgemäß entsprechen die Düsen Bohrungen durch die Mantelfläche des Kerns. Zur Ausrichtung der Düsen weisen die Bohrungen einen vorbestimmten Bohrwinkel auf. Dieser Bohrwinkel ist insbesondere in Abhängigkeit der Steigung, der Form, der Fluidstromgeschwindigkeit und/oder der Masse der Formteile gewählt. Beispielsweise weisen die Bohrungen Winkel zu einer Normalen der Rotationsachse des Hohlzylinders im Bereich von 20° bis 70°, vorzugsweise 30° bis 60° oder besonders bevorzugt im Bereich von 45°, auf.

Die Ausrichtung der Düsen sowie die Herstellung der Düsen durch einfaches Bohren mit vordefinierten Winkeln der Bohrlöcher ist somit einfach realisierbar.

Im Bereich des Führungseingangs kann eine Kamera angeordnet sein. Die Kamera dient, um insbesondere die Qualität der Rotationssymmetrie festzustellen, um zum Beispiel unsymmetrische Formteile, die die Führungsstrecke blockieren könnten, auszusortieren.

Ferner umfasst die Erfindung ein Verfahren zum Fördern von Formteilen von einem unteren Bereich in einen oberen Bereich. Das Verfahren wird insbesondere mit einer der Ausführungsformen der genannten Vorrichtung ausgeführt.

Gemäß dem erfindungsgemäßen Verfahren werden einem Führungseingang einer spiralförmig um einen zylindrischen Kern verlaufenden Führung Formteile, die insbesondere orientiert sind, zugeführt. Das heißt Formteile werden in den Führungseingang, der spiralförmig um einen zylindrischen Kern verläuft, eingeführt.

Auf die ein- bzw. zugeführten Formteile wird eine Kraft ausgeübt, wobei das Ausüben der Kraft durch Zuführen bzw. Einsprühen oder Einblasen eines Fluids in den Bereich der spiralförmig um den zylindrischen Kern verlaufenden Führung erfolgt. Das Zuführen des Fluids erfolgt durch Düsen, die im Bereich der Führung angeordnet sind. Die Formteile, auf die eine Kraft durch das Fluid ausgeübt wird, werden dann vom Führungseingang entlang einer Führungsstrecke zu einem Führungsausgang der Führung gefördert.

Am Führungsausgang werden die Formteile dann entnommen, wobei die Formteile insbesondere eine Orientierung aufweisen, die von der Orientierung, mit der die Formteile dem Führungseingang zugeführt wurden, abhängig ist.

Das Verfahren dient zum Fördern von Formteilen auf einem besonders begrenzten Raum.

Gemäß einer weiteren Ausführungsform sind die Düsen in mehrere aufeinander folgende Segmente eingeteilt, die entlang der Führung verlaufen. Somit durchlaufen die Formteile die aufeinander folgenden Segmente. In einem ersten Segment werden die Formteile von einem Fluid fortbewegt bzw. wird eine Kraft mit einem Fluid auf das Formteil ausgeübt, das ein Desinfektionsmittel, wie zum Beispiel Wasserstoffperoxid oder dergleichen, ist und somit die Formteile im Bereich dieses ersten Segments neben dem antreiben desinfiziert, insbesondere aseptisch desinfiziert.

In einem auf das erste Segment folgenden zweiten Segment werden die Formteile dann mit einem Fluid, das warme Luft ist, weiter bewegt bzw. wird durch dieses Fluid eine Kraft auf die Formteile ausgeübt. Damit werden die Formteile erwärmt, sodass das Desinfektionsmittel besser wirken und nach einiger Zeit verdampfen kann. In einem dritten Segment im Verlauf der Führung, das auf das zweite Segment folgt, wird kalte Luft zum Ausüben der Kraft auf die Formteile verwendet, sodass die Kappen neben dem Fortbewegen wieder abgekühlt werden.

Eine Desinfektion der Formteile ist somit während der Förderung möglich.

Gemäß einem weiteren Aspekt der Erfindung ist es möglich, eine mit Formteilen teilweise oder ganz gefüllte Führung auch als Lagerort für die Formteile zu nutzen. Hierzu wird der Fluidstrom durch die Düsen kurzzeitig abgestellt und der Führungseingang blockiert. Demnach ist dann vorteilhafterweise ein Lagern der Formteile mit geringem Platzbedarf möglich.

Der Kern, die Führung sowie der weitere Zylinder und/oder weitere Komponenten sind gemäß einer weiteren Ausführungsform aus Edelstahl gefertigt. Gemäß weiteren Ausführungsformen wird z.B. 1.403 Edelstahl für Bauteile, die bei der normalen Frischeabfüllung verwendet werden, und 1.4571 Edelstahl für Bauteile, die bei der sterilen Abfüllung verwendet werden, verwendet.

Weitere Ausgestaltungen der Erfindung sind Gegenstand der Unteransprüche.

Vorteile und Ausführungsbeispiele der Erfindung werden nachstehend unter Bezugnahme auf die Zeichnungen näher erläutert.
- Fig. 1: zeigt ein Ausführungsbeispiel der Vorrichtung zur Förderung von Formteilen,
- Fig. 2: einen Schnitt durch die Fördereinrichtung im Bereich eines Druckanschlusses und
- Fig. 3: ein weiteres Ausführungsbeispiel der Vorrichtung.

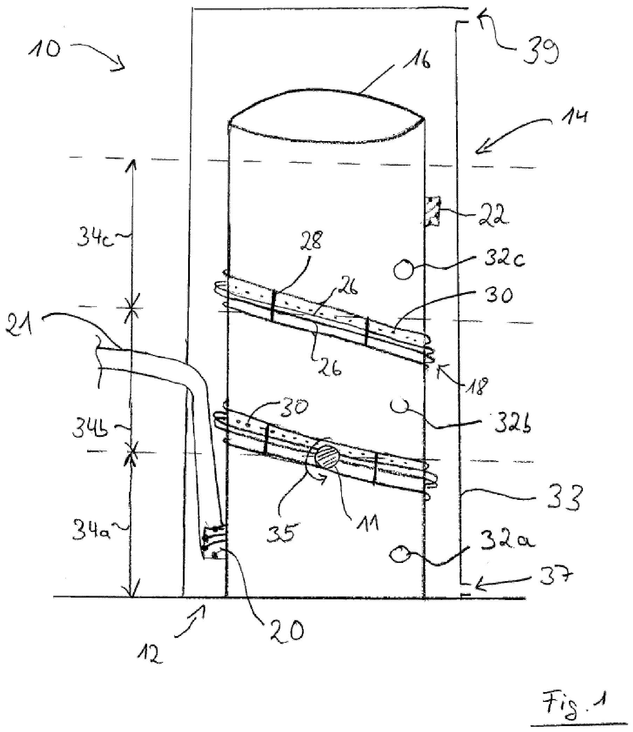

Fig. 1 zeigt ein Ausführungsbeispiel der Vorrichtung 10 zur Förderung von Formteilen 11 von einem unteren Bereich 12 in einen oberen Bereich 14. Die Vorrichtung 10 umfasst einen zylindrischen Kern 16 und eine um den zylindrischen Kern 16 spiralförmig verlaufende Führung 18. Die Führung 18 weist einen Führungseingang 20 im unteren Bereich 12 und einen Führungsausgang 22 im oberen Bereich 14 auf. Der Führungseingang 20 und der Führungsausgang 22 sind über eine Führungsstrecke 24 verbunden.

Die Führungsstrecke 24 ist hier mit vier spiralförmigen Schienen 26 gebildet, die über Halterungen 28 am Kern 16 befestigt sind. Im Bereich der Schienen 26 sind Düsen 30, insbesondere nach Art einer Lochlinie, im Kern 16 angeordnet. Diese sind erfindungsgemäß durch Bohrungen durch die Mantelfläche eines als Hohlzylinder ausgebildeten Kerns 16 angeordnet. Die Düsen 30 sind oberhalb einer gedachten Mittellinie der Führung 18 angeordnet.

Ferner sind drei Druckanschlüsse 32a bis 32c vorgesehen, die jeweils zu einer Kammer des in Kammern eingeteilten Hohlraums des als Hohlzylinder ausgebildeten Kerns 16 führen. Die Kammern sind bei der Darstellung in Fig. 1 nicht erkennbar, wobei die strichlierten Linien die Bereiche kennzeichnen, in denen die Kammern im Hohlraum des als Hohlzylinder ausgebildeten Kerns 16 angeordnet sind. Somit ist im Bereich 34a eine erste Kammer, im Bereich 34b eine zweite Kammer und im Bereich 34c eine dritte Kammer im Hohlraum des als Hohlzylinder ausgebildeten Kerns 16 angeordnet. Demnach stellt also der Druckanschluss 32a einen Druckanschluss für die Kammer im Bereich 34a, der Druckanschluss 32b einen Druckanschluss für die Kammer im Bereich 34b und der Druckanschluss 32c einen Druckanschluss für die Kammer im Bereich 34c dar.

Die Düsen 30, die in den jeweiligen Bereichen dargestellt sind, entsprechen Öffnungen zur jeweiligen Kammer in diesem Bereich. Die Düsen 30 im Bereich 34a stellen Öffnungen zur ersten Kammer, die Düsen 30 im Bereich 34b stellen Öffnungen zur zweiten Kammer und die Düsen 30 im Bereich 34c stellen Öffnungen zur dritten Kammer dar. Die Düsen 30, die derselben Kammer zugeordnet sind, werden als Düsen eines Segments bezeichnet.

Zum Fördern der Formteile werden diese in den Führungseingang 20 eingeführt. Die Rinne 21 ist hier nur optional vorgesehen, z.B. für den Fall, dass die Vorrichtung zur aseptischen Abfüllung verwendet wird. Gemäß einem weiteren - nicht dargestellten - Ausführungsbeispiel erfolgt die Zuführung der Formteile 11 horizontal in den Führungseingang 20 ohne Rinne 21.Gleichzeitig wird mittels der Druckanschlüsse 32a bis 32c in den Kammern ein Druck mit einem oder mehreren zugeführten Fluiden erzeugt, wobei die Kammern mit einem Druck über die Druckanschlüsse 32a bis 32c beaufschlagt werden, der einen definierten Fluidstrom durch die Düsen aus dem Hohlraum des Kerns 16 zur Außenseite des Kerns 16 ermöglicht.

Durch den Fluidstrom mit den Düsen 30 wird eine Kraft auf die Formteile 11 ausgeübt, die somit entlang der Führungsstrecke 24 zum Führungsausgang 22 gefördert werden. Die Formteile 11 drehen sich hierbei um Ihre Rotationsachse in Pfeilrichtung 35, wobei diese Drehung durch die versetzte Anordnung der Düsen 30 zu einer gedachten Mittellinie durch die Führung 18 entlang der Führung 18 hervorgerufen wird. Die Formteile 11 durchlaufen dabei die drei Bereiche 34a bis 34c, deren jeweilige Düsen jeweils einem Segment von Düsen 30 entsprechen.

Im ersten Bereich 34a wird über den Druckanschluss 32a zum Beispiel ein Desinfektionsmittel, wie zum Beispiel Wasserstoffperoxid, in die Kammer eingeführt, sodass durch die Düsen 30 im Bereich 34a dieses Desinfektionsmittel ausströmt, gleichzeitig eine Kraft auf die Kappen ausübt und somit das Desinfektionsmittel auf die Kappen aufbringt.

Im Bereich 34b wird über den Druckanschluss 32b warme Luft in die zweite Kammer eingeführt, die dann über die Düsen 30 dieses Segments, nämlich im Bereich 34b, in den Bereich der Führung 18 ausgegeben wird. Das heißt, in diesem Bereich 34b werden die Formteile durch die warme Luft, die aus den Düsen 30 austritt, während der Fortbewegung auch erwärmt, sodass das Desinfektionsmittel bezüglich seiner Reaktion beschleunigt wird und die Desinfektion daher verbessert wird. Im Bereich 34b werden die Kappen dann soweit erwärmt, dass das Desinfektionsmittel schließlich verdampft, um die Formteile zu trocknen.

Im letzten Bereich 34c wird kalte Luft über den Druckanschluss 32c in die dritte Kammer geführt, sodass die Kappen in diesem Düsensegment durch das Fluid abgekühlt werden, während sie angetrieben werden.

Die Vorrichtung 10 ist mit einer Einhausung 33 eingehaust. Diese dient zum Auffangen des aus den Düsen 30 ausgesprühten Desinfektionsmittels. Die Einhausung 33 weist nicht dargestellte Fenster zur Überwachung auf. Die Einhausung 33 weist im unteren Bereich eine Öffnung 37 auf, um überschüssiges Desinfektionsmittel abzupumpen und für eine erneute Desinfektion zur Verfügung zu stellen. Im oberen Bereich ist ferner ein Absauganschluss 39 zum Absaugen giftiger Gase bei der Desinfektion vorgesehen. Bei der nichtsterilen Abfüllung ist keine Einhausung 33 erforderlich.

Wird der Führungseingang 20 blockiert und die Fluidzufuhr an den Druckanschlüssen 32a bis 32c abgestellt, so dient die Vorrichtung 10 ebenfalls als Lagerort für eine Vielzahl von orientierten Kappen.

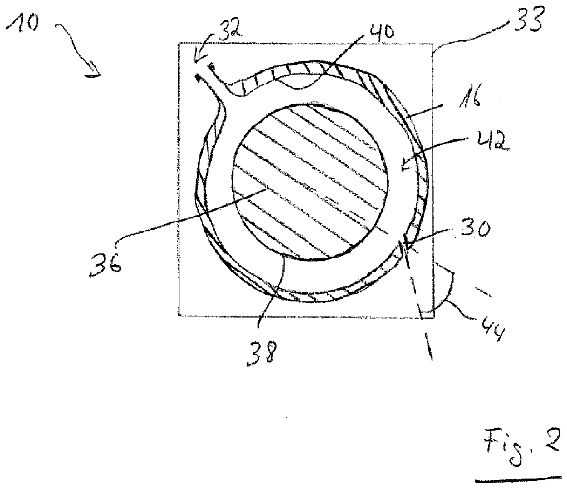

Fig. 2 zeigt einen Schnitt durch die erfindungsgemäße Vorrichtung 10 im Bereich eines Druckanschlusses 32. Der Kern 16 entspricht, wie dargestellt, einem Hohlzylinder. Im Inneren des Hohlzylinders ist ein weiterer Zylinder 36 angeordnet. Die äußere Mantelfläche 38 des weiteren Zylinders 36 sowie die innere Mantelfläche 40 des Hohlzylinders 16 begrenzen einen Hohlraum 42, mit dem die Kammern zur Aufnahme des Fluids gebildet werden.

Demnach wird über den Druckanschluss 32 ein Fluid in den Hohlraum 42 gebracht, wobei das Fluid über Düsen 30 wieder ausströmen kann. Der Durchmesser der Düsen 30 ist geringer als der Durchmesser des Druckanschlusses 32. Die in Fig. 2 dargestellte Düse 30 weist einen Bohrwinkel 44 auf, der dafür sorgt, dass die Düse 30 ein Formteil 11, das in den Bereich der Düse 30 durch die Führung 18 gebracht ist, mit einer Kraft in eine Führungsrichtung beaufschlagt wird. Ferner ist auch die Einhausung 33 dargestellt.

Ein Transport von Formteilen von einem unteren Bereich, z.B. einer Abfüllstätte, in einen oberen Bereich, z.B. der Abfüllstätte, ist somit platzsparend möglich. Ferner ist die gleichzeitige Desinfektion beim Transport möglich, ohne dass eine Desinfektion im oberen Bereich mit viel Aufwand erfolgen muss.

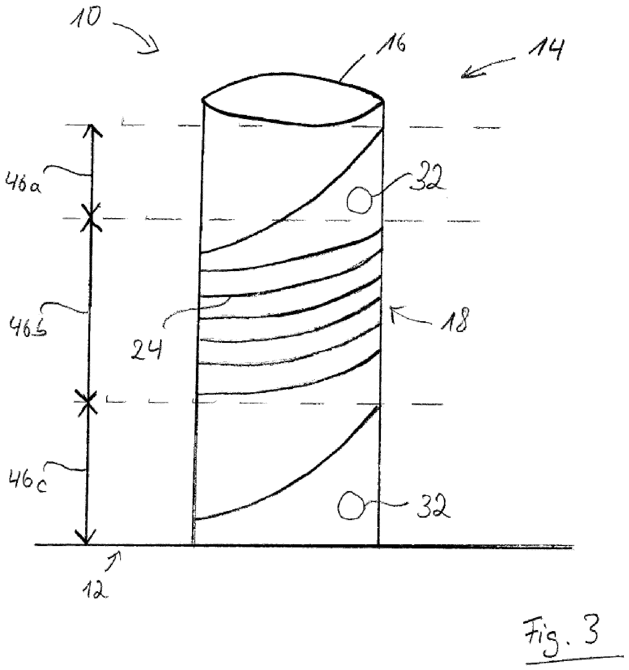

Fig. 3 zeigt ein weiteres Ausführungsbeispiel der Vorrichtung. Hier ist die Führung 18 nur exemplarisch durch eine spiralförmig verlaufende Linie dargestellt. Die Führungsstrecke 24 verläuft hier im oberen und unteren Bereich 46a und 46c steiler als im mittleren Bereich 46b. Durch den flachen Verlauf mit weniger als 10° Steigung im Bereich 46b ist die Anordnung einer längeren Führungsstrecke 24 bei gegebenem Kern 16 möglich, sodass eine Vielzahl, insbesondere mehr als 200, Formteile mit der Vorrichtung zwischengelagert beziehungsweise vorgehalten werden können.

## Patentansprüche

1. Vorrichtung zur Förderung von Formteilen (11), zum Beispiel Verschlusskappen für Flaschen, von einem im Verhältnis zu einem oberen Bereich (14) tiefer liegenden unteren Bereich (12) in den oberen Bereich (14), umfassend:
- einen zylindrischen Kern (16),
- eine spiralförmig um den Kern (16) verlaufende Führung (18) zum Führen der Formteile (11) und
- mehrere im Bereich der Führung (18) angeordnete Düsen (30) zum Zuführen eines Fluids in den Bereich der Führung (18), um mit dem Fluid eine auf die Formteile (11) wirkende Kraft zu erzeugen,
**dadurch gekennzeichnet, dass**
die Düsen (30) Bohrungen durch die Mantelfläche des Kerns (16) mit einem Bohrwinkel (44) zur Normalen der rotationssymmetrischen Achse des Kerns (16) entsprechen, wobei der Bohrwinkel (44) abhängig von der Steigung der spiralförmigen Führung (18) im Bereich der Bohrung ist.

2. Vorrichtung nach Anspruch 1, wobei
die Führung (18) einen Führungseingang (20), einen Führungsausgang (22) und eine zwischen dem Führungseingang (20) und dem Führungsausgang (22) angeordnete Führungsstrecke (24) umfasst, wobei die Führungsstrecke (24) derart eingerichtet ist, die Formteile (11) am Führungseingang (20) in einer ersten Orientierung aufzunehmen und in einer von der ersten Orientierung abhängigen zweiten Orientierung am Führungsausgang (22) auszugeben.

3. Vorrichtung nach Anspruch 2, wobei
die Führungsstrecke (24) mehrere im Wesentlichen zueinander parallel verlaufende Schienen (26), zum Beispiel nach Art einer Reling, umfasst und wobei der Abstand und/oder die Anordnung der Schienen (26) derart gewählt ist, das Formteil (11) nach dem Eintreten in den Führungseingang (20) und vor dem Austreten aus dem Führungsausgang (22) innerhalb der Führung (18) zu halten.

4. Vorrichtung nach Anspruch 3, wobei
die Düsen (30) versetzt zu einer gedachten Mittellinie der Führung (18) entlang der Führung (18), insbesondere im Bereich oberhalb dieser gedachten Mittellinie, zum Beispiel in der Mitte der oberen Hälfte der Führung (18), entlang der Führung (18) angeordnet sind, und der Abstand der Schienen (26) derart gewählt ist, Formteile (11) mit einer abrollbaren Kontur innerhalb der Führungsstrecke (24) zu halten.

5. Vorrichtung nach einem der Ansprüche 1 bis 4, wobei
der Kern (16) einen Hohlzylinder mit geschlossenen Deckelflächen und einem im Inneren des Hohlzylinders gebildeten Hohlraum (42) umfasst sowie mindestens einen Druckanschluss (32a-32c) zum Zuführen eines Fluids von der Außenseite des Hohlzylinders in den Hohlraum (42) aufweist, und die Düsen (30) Öffnungen vom Hohlraum (42) zum Bereich der Führung (18) entsprechen.

6. Vorrichtung nach Anspruch 5, wobei
der Hohlraum (42) in mehrere, insbesondere drei, Kammern unterteilt ist und jede Kammer jeweils mindestens einen eigenen Druckanschluss (32a-32c) aufweist, wobei die Düsen (30), die Öffnungen zur selben Kammer umfassen, als Düsen (30) eines Düsensegments dieser Kammer bezeichnet werden und die Kammern derart über die Höhe des Kerns (16) verteilt angeordnet sind, dass die Düsensegmente in einer vordefinierten Reihenfolge im Bereich der Führung (18) verlaufen.

7. Vorrichtung nach Anspruch 5 oder 6, wobei
im Inneren des Kerns (16) ein weiterer Zylinder (36) angeordnet ist und der Hohlraum (42) durch die äußere Mantelfläche (38) des weiteren Zylinders (36) und die innere Mantelfläche (40) des Kerns (16) sowie die Deckelflächen begrenzt wird.

8. Vorrichtung nach einem der Ansprüche 2 bis 7, wobei
die Düsen (30) ausgerichtet sind, eine Hauptströmungsrichtung des Fluids zu erzeugen, sodass das Fluid dient, um die Formteile (11) vom Führungseingang (20) zum Führungsausgang (22) in einer Förderrichtung zu fördern.

9. Verfahren zum Fördern von Formteilen (11), zum Beispiel Kappen für Flaschen, von einem im Verhältnis zu einem oberen Bereich (14) liegenden unteren Bereich (12) in den oberen Bereich (14) mit einer Vorrichtung (10) nach einem der Ansprüche 1 bis 8, umfassend die Schritte:
- Zuführen der, insbesondere orientierten, Formteile (11) in einen Führungseingang (20) einer spiralförmig um einen zylindrischen Kern (16) verlaufenden Führung (18),
- Ausüben einer Kraft auf die Formteile (11) durch Zuführen eines Fluids in den Bereich der Führung (18) mit im Bereich der Führung (18) angeordneten Düsen (30),
- Fördern der Formteile (11) durch die ausgeübte Kraft vom Führungseingang (20) entlang einer Führungsstrecke (24) der Führung (18) zum Führungsausgang (22) der Führung (18) und
- Entnehmen der Formteile (11) an einem Führungsausgang (22).

10. Verfahren nach Anspruch 9, wobei
die Düsen (30) in mehrere aufeinanderfolgende Segmente eingeteilt sind und in einem ersten Segment ein Desinfektionsmittel, zum Beispiel Wasserstoffperoxid, zum Ausüben der Kraft verwendet wird, in einem nach dem ersten Segment im Verlauf der Führung (18) folgenden zweiten Segment warme Luft zum Ausüben der Kraft verwendet sind und in einem nach dem zweiten Segment im Verlauf der Führung (18) folgenden dritten Segment kalte Luft zum Ausüben der Kraft verwendet wird.

## Claims

1. A device for conveying shaped parts (11), for example closure caps for bottles, from a lower region (12), lying at a lower level in relation to an upper region (14), into the upper region (14), comprising:
- a cylindrical core (16),
- a guide (18) for guiding the shaped parts (11), running in a spiral around the core (16) and
- a plurality of nozzles (30), arranged in the region of the guide (18), for feeding a fluid into the region of the guide (18), in order to generate with the fluid a force acting upon the shaped parts (11),
**characterized in that**
the nozzles (30) correspond to bores through the casing surface of the core (16) which have a bore angle (44) with respect to the normal of the rotationally-symmetrical axis of the core (16), wherein the bore angle (44) is dependent on the inclination of the spiral-shaped guide (18) in the region of the bore.

2. A device according to claim 1, wherein
the guide (18) comprises a guide entrance (20), a guide exit (22) and a guide path (24) arranged between the guide entrance (20) and the guide exit (22), wherein the guide path (24) is configured to receive the shaped parts (11) at the guide entrance (20) in a first orientation and to dispense them at the guide exit (22) in a second orientation dependent on the first orientation.

3. A device according to claim 2, wherein
the guide path (24) comprises a plurality of rails (26) running substantially parallel to one another, for example in the manner of a railing, and wherein the spacing and/or the arrangement of the rails (26) is/are selected so as to hold the shaped part (11) within the guide (18) after entry into the guide entrance (20) and before dispensing from the guide exit (22).

4. A device according to claim 3, wherein
the nozzles (30) are arranged along the guide (18) in a manner offset with respect to a notional centre line of the guide (18) along the guide (18), in particular in the region above this notional centre line, for example in the middle of the upper half of the guide (18), and the spacing of the rails (26) is selected to hold shaped parts (11) with a rollable contour within the guide path (24).

5. A device according to any one of claims 1 to 4, wherein
the core (16) comprises a hollow cylinder, with closed lid surfaces and a hollow space (42) formed in the interior of the hollow cylinder, as well as at least one pressure connection (32a-32c) for feeding a fluid from the exterior of the hollow cylinder into the hollow space (42), and the nozzles (30) correspond to openings from the hollow space (42) to the region of the guide (18).

6. A device according to claim 5, wherein
the hollow space (42) is divided into a plurality of chambers, in particular three, and each chamber has in each case at least one pressure connection (32a-32c) of its own, wherein the nozzles (30) which comprise openings to the same chamber are designated as nozzles (30) of a nozzle segment of this chamber and the chambers are arranged distributed over the height of the core (16) in such a manner that the nozzle segments run in a pre-defined order in the region of the guide (18).

7. A device according to claim 5 or 6, wherein
a further cylinder (36) is arranged within the core (16) and the hollow space (42) is bounded by the outer casing surface (38) of the further cylinder (36) and the inner casing surface (40) of the core (16) as well as the lid surfaces.

8. A device according to any one of claims 2 to 7, wherein
the nozzles (30) are oriented in a manner to generate a main flow direction of the fluid, so that the fluid serves to convey the shaped parts (11) in a conveying direction from the guide entrance (20) to the guide exit (22).

9. A method of conveying shaped parts (11), for example caps for bottles, from a lower region (12), lying in relation to an upper region (14), into the upper region (14) by means of a device (10) according to any one of claims 1 to 8, comprising the steps:
- feeding of the, in particular oriented, shaped parts (11) into a guide entrance (20) of a guide (18) running in a spiral around the cylindrical core (16),
- exertion of a force upon the shaped parts (11) by the feeding of a fluid into the region of the guide (18) by means of nozzles (30) arranged in the region of the guide (18),
- conveying of the shaped parts (11) from the guide entrance (20) to the guide exit (22) of the guide (18) along a guide path (24) of the guide (18) by the exerted force and
- removal of the shaped parts (11) at a guide exit (22).

10. A method according to claim 9, wherein
the nozzles (30) are divided into a plurality of successive segments and a disinfectant, for example hydrogen peroxide, is used in a first segment to exert the force, warm air is used to exert the force in a second segment following after the first segment in the course of the guide (18), and cold air is used to exert the force in a third segment following after the second segment in the course of the guide (18).

## Revendications

1. Dispositif servant à transporter des pièces moulées (11), par exemple des bouchons de fermeture pour des bouteilles, d'une zone inférieure (12) plus basse par rapport à une zone supérieure (14) à la zone supérieure (14), comprenant :
- une partie centrale cylindrique (16),
- un système de guidage (18) s'étendant en forme de spirale autour de la partie centrale (16), servant à guider les pièces moulées (11), et
- plusieurs buses (30) disposées dans la zone du système de guidage (18), servant à amener un fluide dans la zone du système de guidage (18) pour produire avec le fluide une force agissant sur les pièces moulées (11),
**caractérisé en ce que**
les buses (30) correspondent à des alésages à travers la surface enveloppante de la partie centrale (16) avec un angle de perçage (44) par rapport à la normale de l'axe symétrique en rotation de la partie centrale (16), dans lequel l'angle de perçage (44) dépend de l'inclinaison du système de guidage (18) en forme de spirale dans la zone de l'alésage.

2. Dispositif selon la revendication 1, dans lequel
le système de guidage (18) comprend une entrée de guidage (20), une sortie de guidage (22) et un tronçon de guidage (24) disposé entre l'entrée de guidage (20) et la sortie de guidage (22), dans lequel le tronçon de guidage (24) est conçu de manière à recevoir les pièces moulées (11) au niveau de l'entrée de guidage (20) selon une première orientation et les distribuer selon une seconde orientation dépendant de la première orientation au niveau de la sortie de guidage (22).

3. Dispositif selon la revendication 2, dans lequel
le tronçon de guidage (24) comprend plusieurs rails (26) s'étendant sensiblement de manière parallèle les uns par rapport aux autres, par exemple à la manière d'un bastingage et dans lequel la distance et/ou la disposition des rails (26) sont choisies de manière à maintenir la pièce moulée (11) après l'entrée dans l'entrée de guidage (20) et avant la sortie hors de la sortie de guidage (22) à l'intérieur du système de guidage (18).

4. Dispositif selon la revendication 3, dans lequel
les buses (30) sont disposées de manière décalée par rapport à une ligne centrale imaginaire du système de guidage (18) le long du système de guidage (18), en particulier dans la zone au-dessus de ladite ligne centrale imaginaire, par exemple au centre de la moitié supérieure du système de guidage (18), le long du système de guidage (18), et la distance entre les rails (26) est choisie de manière à maintenir des pièces moulées (11) avec un contour pouvant être déroulé à l'intérieur du tronçon de guidage (24).

5. Dispositif selon l'une quelconque des revendications 1 à 4, dans lequel
la partie centrale (16) comprend un cylindre creux avec des surfaces de recouvrement fermées et un espace creux (42) formé à l'intérieur du cylindre creux et présente au moins un raccord de pression (32a - 32c) servant à amener un fluide depuis le côté extérieur du cylindre creux dans l'espace creux (42), et les buses (30) correspondent à des ouvertures allant de l'espace creux (42) à la zone du système de guidage (18).

6. Dispositif selon la revendication 5, dans lequel
l'espace creux (42) est divisé en plusieurs, en particulier trois, chambres et chaque chambre présente respectivement au moins un raccord de pression (32a - 32c) propre, dans lequel les buses (30), qui comprennent des ouvertures vers la même chambre, sont désignées par buses (30) d'un segment de buses de ladite chambre et les chambres sont disposées de manière répartie sur la hauteur de la partie centrale (16) de telle manière que les segments de buse s'étendent selon un ordre prédéfini dans la zone du système de guidage (18).

7. Dispositif selon la revendication 5 ou 6, dans lequel
un autre cylindre (36) est disposé à l'intérieur de la partie centrale (16) et l'espace creux (42) est délimité par la surface enveloppante extérieure (38) de l'autre cylindre (36) et la surface enveloppante intérieure (40) de la partie centrale (16) ainsi que par les surfaces de recouvrement.

8. Dispositif selon l'une quelconque des revendications 2 à 7, dans lequel
les buses (30) sont orientées pour produire une direction d'écoulement principale du fluide de sorte que le fluide serve à transporter dans une direction de transport les pièces moulées (11) de l'entrée de guidage (20) à la sortie de guidage (22).

9. Procédé servant à transporter des pièces moulées (11), par exemple des bouchons pour des bouteilles, d'une zone inférieure (12) située par rapport à une zone supérieure (14) à la zone supérieure (14) avec un dispositif (10) selon l'une quelconque des revendications 1 à 8, comprenant les étapes :
- d'amenée des pièces moulées (11), en particulier orientées, dans une entrée de guidage (20) d'un système de guidage (18) s'étendant en forme de spirale autour d'une partie centrale cylindrique (16),
- d'application d'une force sur les pièces moulées (11) en amenant un fluide dans la zone du système de guidage (18) avec des buses (30) disposées dans la zone du système de guidage (18),
- de transport des pièces moulées (11) par la force appliquée de l'entrée de guidage (20) le long d'un tronçon de guidage (24) du système de guidage (18) à la sortie de guidage (22) du système de guidage (18), et
- de prélèvement des pièces moulées (11) au niveau d'une sortie de guidage (22).

10. Procédé selon la revendication 9, dans lequel
les buses (30) sont divisées en plusieurs segments se suivant les uns les autres et un produit de désinfection, par exemple du peroxyde d'hydrogène, est utilisé dans un premier segment pour appliquer la force, de l'air chaud est utilisé pour appliquer la force dans un deuxième segment suivant le premier segment le long du système de guidage (18) et de l'air froid est utilisé pour appliquer la force dans un troisième segment suivant le deuxième segment le long du système de guidage (18).
